(19) Europäisches Patentamt
European Patent Office
Office européen des brevets

(11) Numéro de publication : **0 408 473 B1**

# (12) FASCICULE DE BREVET EUROPEEN

(45) Date de publication du fascicule du brevet : **11.08.93 Bulletin 93/32**

(51) Int. Cl.$^5$ : **C08G 18/34,** C08G 73/12

(21) Numéro de dépôt : **90420323.9**

(22) Date de dépôt : **09.07.90**

## (54) Poly(amide-imides) aromatiques linéaires fonctionnalisés en bout de chaînes par des groupements comprenant un reste à fonction maléimide latente, procédé pour leur préparation et leur emploi pour notamment préparer des polymères réticulés.

(30) Priorité : **11.07.89 FR 8909669**

(43) Date de publication de la demande : **16.01.91 Bulletin 91/03**

(45) Mention de la délivrance du brevet : **11.08.93 Bulletin 93/32**

(84) Etats contractants désignés : **AT BE CH DE DK ES FR GB GR IT LI LU NL SE**

(56) Documents cités :
**FR-A- 2 166 209**
**PATENT ABSTRACTS OF JAPAN, vol. 8, no. 114 (C-225)[1551], 26 mai 1984; & JP-A-59 27 921**

(73) Titulaire : **CIBA-GEIGY AG**
**Klybeckstrasse 141**
**CH-4002 Basel (CH)**

(72) Inventeur : **Camberlin, Yves**
**68 bis, quai Clemenceau**
**F-69300 Caluire (FR)**
Inventeur : **Michaud, Philippe**
**100, rue Bugeaud**
**F-69006 Lyon (FR)**



Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne de nouveaux poly(amide-imide) aromatiques linéaires dont les chaînes comportent des groupements terminaux comprenant chacun un reste à fonction maléimide latente. Elle concerne également un procédé de préparation de ces poly(amide-imide) fonctionnalisés en bout de chaînes. Elle a trait encore à leur utilisation pour notamment préparer des polymères réticulés.

Dans le présent mémoire, par l'expression "un reste à fonction maléimide latente", on entend définir un radical renfermant une fonction maléimide masquée, qui dans les conditions et au début de la transformation ultérieure des poly(amide-imide) de l'invention, forme sous l'effet de la chaleur une fonction maléimide libre de formule :

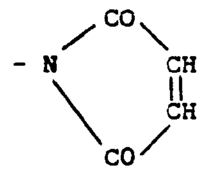

(réaction dite de déblocage thermique des fonctions maléimide).

On a déjà décrit dans la demande japonaise JP-A-50/089.499 des poly(amide-imide) fonctionnalisés en bouts de chaînes par des groupements pouvant comprendre chacun un reste à fonction maléimide latente comme un reste nadimido (ou endométhylène-3,6 tétrahydro-1,2,3,6 phtalimido) qui sont obtenus en enchaînant les étapes suivantes : réaction de polycondensation en solution entre, notamment, un monoanhydride d'acide tricarboxylique et un excès d'une diamine diprimaire aromatique, puis réaction de condensation de l'acide nadique (ou acide endométhylène-3,6 tétrahydro-1,2,3,6 phtalique) sur les groupements terminaux $NH_2$ des oligomères formés à l'issue de la réaction de polycondensation. Toutefois, la mise en oeuvre d'un pareil procédé présente plusieurs inconvénients. Un de ces inconvénients, commun à la plupart des procédés où l'on fait réagir un réactif aminé avec un composé organique carbonylé comme un anhydride d'acide carboxylique, consiste dans la nécessité de réaliser la déshydratation cyclisante des poly(amide-acide) formés intermédiairement ; cette réaction étant équilibrée, il faut éliminer l'eau libérée et cette opération de cyclisation ne peut généralement pas être effectuée de manière complète en solution. Un autre inconvénient, qui résulte de l'impossibilité ou tout au moins de la grande difficulté à obtenir une cyclisation complète des poly(amide-acide) formés intermédiairement, consiste dans le développement de réactions secondaires, faisant intervenir les poly(amide-acide) non cyclisés, qui sont responsables d'une fonctionnalisation imparfaite des bouts de chaînes poly(amide-imide) par des groupements à reste nadimido et d'une augmentation des masses moléculaires ; il en résulte une grande difficulté, si non une impossibilité, de pouvoir mettre en oeuvre ces polymères (après déblocage thermique des fonctions maléimide) à des températures égales ou inférieures à 300°C et à des pressions égales ou inférieures à 10 MPa pour fabriquer par exemple des articles conformés par moulage par compression.

Il a maintenant été trouvé, et c'est ce qui constitue l'objet de la présente invention, de nouveaux poly(amide-imide) fonctionnalisés en bouts de chaînes par des groupements comprenant chacun un reste à fonction maléimide latente, qui ne présentent pas les inconvénients mentionnés ci-avant tant à props de leur procédé de préparation qu'à propos de leur transformation ultérieure.

Plus précisément, la présente invention concerne de nouveaux poly(amide-imide) aromatiques linéaires dont les chaînes comportent des groupements terminaux comprenant chacun un reste à fonction maléimide latente, ces poly(amide-imide) étant caractérisés en ce qu'ils sont préparés par un procédé présentant les particularités suivantes :

* on réalise un chauffage, en opérant à une température allant de 50°C à 200°C et en présence d'un solvant organique ou mélange de solvants organiques, des réactifs (i), (2i) et (3i) suivants , lesdits réactifs étant mis à réagir simultanément :
  - (i) est un diisocyanate de formule :

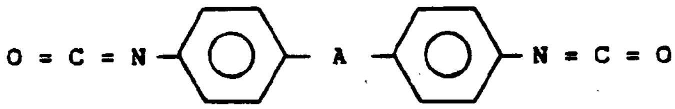

(I)

dans laquelle le symbole A représente un lien valentiel simple ou un groupement :

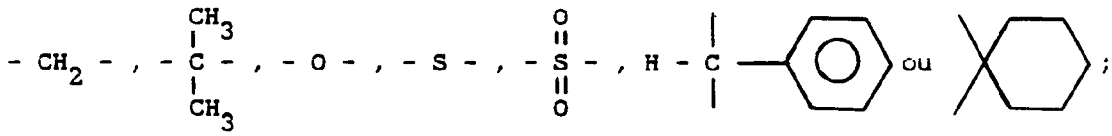

- (2i) est un monoanhydride d'acide tricarboxylique de formule :

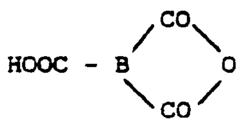

(II)

dans laquelle le symbole B représente un radical trivalent consistant dans un radical aromatique possédant au moins 6 atomes de carbone, substitués ou non, ou dans deux de ces radicaux reliés entre eux par un lien valentiel simple ou un groupement :

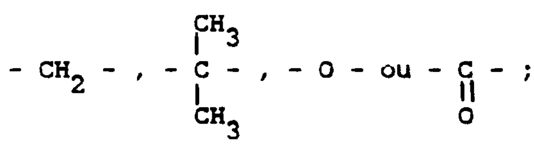

ou le monoanhydride-3,4 d'acide diphényl-sulfone-tricarboxylique-3,4,3'; et

- (3i) un monoacide carboxylique, comprenant un reste à fonction maléimide latente, de formule :

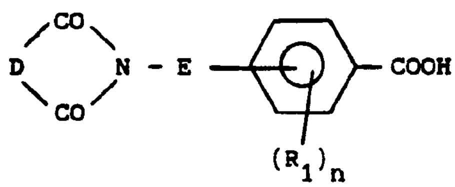

(III)

dans laquelle :

. le symbole $R_1$ représente un radical méthyle ;

. n est un nombre entier égal à 0,1, 2 ou 3 ;

. le symbole E représente un lien valentiel simple ou un groupement $-CH_2-$ et se trouve en position ortho, méta ou para par rapport à l'atome de carbone du cycle benzénique relié au groupe COOH ;

. le symbole D représente un groupement divalent :

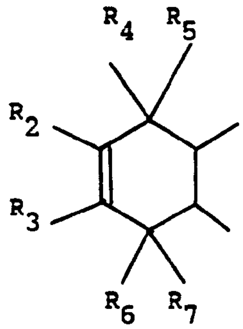 , 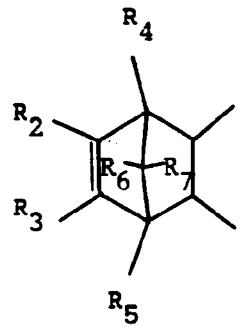 ou 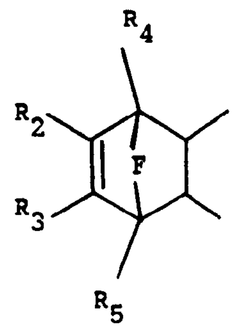

où les symboles $R_2$, $R_3$, $R_4$, $R_5$, $R_6$ et $R_7$, identiques ou différents, représentent chacun un atome d'hydrogène ou un radical alkyle, linéaire ou ramifié, ayant de 1 à 4 atomes et le symbole F représente un atome d'oxygène ou de soufre ;

* les proportions respectives des réactifs (i) et (2i) sont choisies de façon à ce que le rapport r :

$$\frac{\text{nombre de moles de diisocyanate (i)}}{\text{nombre de moles d'anhydride (2i)}}$$

se situe dans l'intervalle allant de 1,05/1 à 2,1 ;

* la proportion du réactif (3i) est choisie de façon que le rapport r' :

$$\frac{\text{nombre de moles d'acide carboxylique (3i)}}{\text{nombre de moles de diisocyanate (i)} - \text{nombre de moles d'anhydride (2i)}}$$

soit égal à 2.

D'après les définitions qui précèdent, on comprend que l'expression "reste à fonction maléimide latente" désigne dans la présente invention un reste de formule :

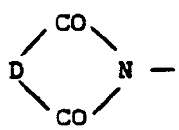 (IV)

dans laquelle D a la signification donnée ci-avant.

A titre d'exemples spécifiques de diisocyanate (i) de formule (I) qui conviennent bien, on peut citer en particulier :

- le diisocyanato-4,4'-diphényl-2,2-propane,
- le diisocyanato-4,4'-diphénylméthane,
- le diisocyanato-4,4'-biphényle,
- le diisocyanato-4,4'-diphénylsulfure,
- le diisocyanato-4,4'-diphénylsulfone,
- le diisocyanato-4,4'-diphényléther,
- le diisocyanato-4,4'-diphényl-1,1-cyclohexane.

On utilise de préférence, pour la mise en oeuvre de la présente invention, le diisocyanato-4,4'-diphénylméthane et le diisocyanato-4,4'-diphényléther.

A titre d'exemples spécifiques de monoanhydrides d'acides tricarboxyliques (2i) de formule (II) qui conviennent bien, on peut citer en particulier :

- le monoanhydride d'acide trimellique,
- le monoanhydride-2,3 d'acide naphtalène-tricarboxylique-2,3,6,
- le monoanhydride-1,8 d'acide naphtalène-tricarboxylique-1,8,4,
- le monoanhydride-1,2 d'acide naphtalène-tricarboxylique-1,2,5,
- le monoanhydride-3,4 d'acide diphényl-tricarboxylique-3,4,4',
- le monoanhydride-3,4 d'acide diphényl-sulfone-tricarboxylique-3,4,3',
- le monoanhydride-3,4 d'acide diphényl-éther-tricarboxylique-3,4,4',
- le monoanhydride-3,4 d'acide benzophénone-tricarboxylique 3,4,4',
- le monoanhydride-3,4 d'acide diphényl-isopropylène-tricarboxylique-3,4,3'.

On utilise de préférence, pour la mise en oeuvre de la présente invention, le monoanhydride d'acide trimellique.

A titre d'exemples spécifiques de monoacides carboxyliques (3i) de formule (III) qui conviennent bien, on peut citer en particulier :

- l'acide (tétrahydro-1,2,3,6 phtalimido)-2 benzoïque,
- l'acide (tétrahydro-1,2,3,6 phtalimido)-3 benzoïque,
- l'acide (tétrahydro-1,2,3,6 phtalimido)-4 benzoïque,
- l'acide nadimido-2 benzoïque ou acide (endométhylène-3,6 tétrahydro-1,2,3,6 phtalimido)-2 benzoïque,
- l'acide nadimido-3 benzoïque,
- l'acide nadimido-4 benzoïque,
- l'acide (α-méthyl-nadimido)-2 benzoïque ou acide (méthyl-4 endométhylène-3,6 tétrahydro-1,2,3,6 phtalimido)-2 benzoïque),
- l'acide (α-méthyl-nadimido)-3 benzoïque,
- l'acide (α-méthyl-nadimido)-4 benzoïque,
- l'acide (endo-oxy-3,6 tétrahydro-1,2,3,6 phtalimido)-2 benzoïque,
- l'acide (endo-oxy-3,6 tétrahydro-1,2,3,6 phtalimido)-3 benzoïque,
- l'acide (endo-oxy-3,6 tétrahydro-1,2,3,6 phtalimido)-4 benzoïque.

On utilise de préférence, pour la mise en oeuvre de la présente invention, l'acide nadimido-4 benzoïque et l'acide (α-méthyl-nadimido)-4 benzoïque.

Les monoacides carboxyliques (3i) sont des composés connus, pour la plupart, de l'art antérieur [cf. notamment Chemical Abstracts : 75,35463d (1971) ; 82,133.114e (1975) ; 92,146.595u (1980) ; et 102,148.446v (1985)]. Ils peuvent être préparés notamment en faisant réagir en solution un acide aminocarboxylique de formule :

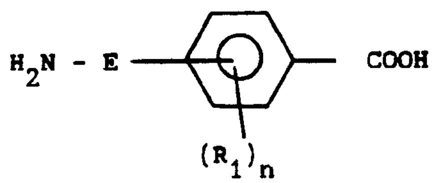

(V)

dans laquelle les symboles $R_1$, n et E ont les significations données ci-avant dans la formule (III) avec l'anhydride de formule :

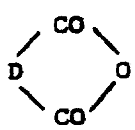

(VI)

dans laquelle le symbole D a la signification donnée ci-avant dans la formule (III), en opérant en présence d'anhydride acétique et par exemple de triéthylamine et d'un sel de nickel.

La réaction permettant de préparer les poly(amide-imide) selon la présente invention est conduite en milieu homogène par addition aux réactifs (i), (2i) et (3i) d'un solvant ou mélange de solvants communs aux réactifs et au produit formé. les solvants qui conviennent bien dont les solvants polaires, en particulier le N,N-diméthylacétamide, le N,N-diméthylformamide, la N-méthyl-pyrrolidone-2, le diméthyl-sulfoxyde, la tétraméthyl-1,1,3,3 urée, la diméthyl-1,3 urée et un mélange de ces solvants ; ils doivent de plus être parfaitement anhydres.

De manière préférentielle, les proportions des réactifs (i) et (2i) sont choisies de façon que le rapport r :

$$\frac{\text{nombre de moles de diisocyanate (i)}}{\text{nombre de moles d'anhydride (2i)}}$$

se situe dans l'intervalle allant de 1,1/1 à 1,5/1.

La réaction de polymérisation est effectuée à une température comprise entre 50°C et 200°C ; les meilleurs résultats sont obtenus à des températures comprises entre 80°C et 190°C.

Pratiquement, on dissout les réactifs de départ, qui sont engagés ensemble, dans le (ou les) solvant(s) en opérant de préférence à température ambiante (de l'ordre de 20°C à 30°C), puis on élève la température de la solution obtenue à la température de réaction désirée comprise entre 50°C et 200°C, et de préférence entre 80°C et 190°C, soit directement, soit de manière progressive, en opérant généralement sous la pression atmosphérique pendant une durée qui va varier dans une large mesure en fonction des conditions précises

de températures adoptées. De manière très préférentielle, le processus opératoire consiste à porter la solution réactionnelle à une température comprise, au début de la réaction, entre 80°C et 110°C puis à élever la température en cours de réaction, de 80°C à 110°C au début de la réaction jusqu'à 160-190°C, en suivant un programme avec une montée en température de l'ordre de +50°C à +110°C au bout d'une unité de temps variant de 1 heure à 3 heures ; une fois la température maximale désirée (entre 160°C et 190°C) atteinte, on pratique encore un palier de chauffage à cette température pendant une durée allant de 2 heures à 4 heures.

La réaction permettant de préparer les poly(amide-imide) selon la présente invention peut être conduite au besoin en présence d'un catalyseur approprié. Les catalyseurs utilisables le cas échéant sont des composés organiques ne comportant pas de groupements fonctionnels à hydrogène mobile susceptible de réagir avec les groupes isocyanates. Conviennent bien dans cette optique notamment les amines tertiaires appartenant à la famille des composés mono- ou polycycliques ayant au moins un atome d'azote tertiaire intra- et/ou extracyclique ; à titre d'exemples spécifiques de catalyseurs utilisables, on peut citer en particulier : le diazo-1,4-bicyclo [2,2,2] octane, les N,N'-dialkylpipérazines, la N-alkylmorpholine, la N-alkylpipéridine dans lesquelles le radical alkyle est un radical méthyle et/ou éthyle. On peut également envisager d'utiliser comme catalyseurs des sels de métaux ; à titre d'exemples spécifiques de pareils catalyseurs, on peut citer en particulier : le dilaurate de dibutylétain, l'acétylacétonate de cobalt.

La quantité de catalyseur, quand on choisit d'en utiliser un, représente généralement de 0,1 à 2 % du poids total des réactifs (i), (2i) et (3i) mis en solution.

En fin de réaction, le poly(amide-imide) est obtenu sous forme de solution. On le fait précipiter par addition dans le milieu réactionnel d'un non-solvant ou d'un mélange de non-solvants et on sépare le polymère précipité du milieu réactionnel. Les non-solvants convenables sont par exemple l'eau, l'acétone, le tétrahydrofuranne, le toluène ou tout autre solvant ne solubilisant pas le polymère souhaité. Il est aussi possible d'obtenir le polymère par évaporation du (ou des) solvant(s) du milieu réactionnel dans une étuve ventilée. Une fois séparé et séché, le polymère obtenu se présente sous forme d'une poudre qui peut subir des opérations ultérieures de broyage et de tamisage.

Le déblocage thermique des fonctions maléimide peut être réalisé aisément par simple chauffage du polymère en poudre à une température comprise entre 200°C et 300°C et, de préférence, entre 220°C et 280°C pendant une durée qui va varier en fonction des conditions précises de températures adoptées et est généralement comprise entre 30 minutes et 2 heures. Pendant ce traitement thermique, il se produit la transformation, en bouts de chaînes du poly(amide-imide) :

- des groupements terminaux Y, comprenant chacun un reste à fonction maléimide latente, de formule :

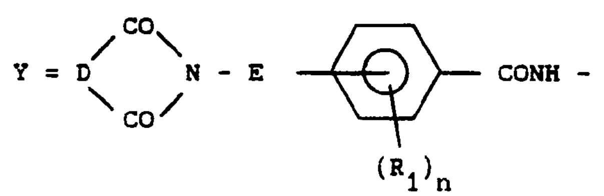

(VII)

dans laquelle les symboles $R_1$, n, E et D ont les significations données ci-avant à propos de la formule (III),

- en groupements terminaux Z, comprenant chacun une fonction maléimide libre, de formule :

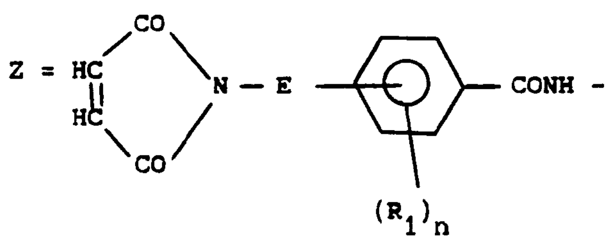

(VIII)

dans laquelle les symboles $R_1$, n, E et D ont les significations données ci-avant dans la formule (III).

S'agissant de la structure de la chaîne linéaire du poly(amide-imide), elle répond essentiellement à la formule suivante :

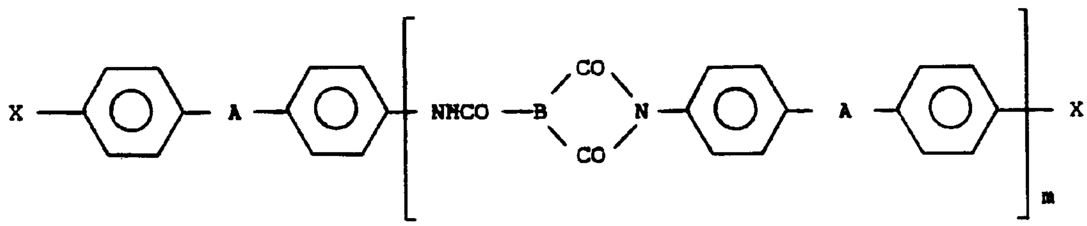

(IX)

dans laquelle : les symboles A et B ont les significations données ci-avant à propos des formules (I) et (II) ; le symbole m représente un nombre au moins égal à 1 et qui se situe de préférence dans l'intervalle allant de 1 à 10 ; X = Y avant déblocage thermique des fonctions maléimide et X = Z après réalisation dudit déblocage.

Les poly(amide-imide) obtenus après réalisation du déblocage thermique des fonctions maléimide peuvent servir avantageusement pour la fabrication de produits conformés en utilisant les techniques du moulage par compression avec des conditions de températures qui sont égales ou inférieures à 300°C et de pressions qui sont égales ou inférieures à 10 MPa.

Un avantage des poly(amide-imide) obtenus après déblocage thermique des fonctions maléimide réside dans le fait que, grâce à leurs groupements terminaux de type maléimido très réatifs, ils peuvent être transformés, à un moment quelconque de leur mise en forme (de préférence après mise en forme), en polymères réticulés doués d'excellentes propriétés mécaniques et électriques ainsi que d'une grande inertie chimique à des températures de 200°C à 300°C. Cette réticulation est opérée par simple chauffage à une température comprise entre 150°C et 300°C pendant un temps déterminé en présence éventuellement d'un initiateur de polymérisation radicalaire ou d'un catalyseur de polymérisation anionique.

Les poly(amide-imide) obtenus après déblocage thermique des fonctions maléimide peuvent encore être engagés dans des réactions de copolymérisation avec un ou plusieurs autre(s) composé(s) ayant des groupes capables de réagir avec les doubles liaisons réactives des groupements terminaux de type maléimido.

Les exemples qui suivent sont donnés à titre illustratif, mais non limitatif.

EXEMPLE 1 :

Dans un réacteur en verre de 250 $cm^3$, muni d'une agitation centrale de type ancre, d'un réfrigérant ascendant et d'un système de chauffage à l'aide d'un bain d'huile approprié, réacteur dans lequel on établit une légère surpression d'azote sec, on introduit successivement à température ambiante :

- 19,2 g (0,1 mole) de monoanhydride d'acide trimellique,
- 30,0 g (0.12 mole) de diisocyanato-4,4'-diphénylméthane,
- 11,9 g (0,04 mole) d'acide ($\alpha$-méthyl-nadimido)-4 benzoïque
- et 189 g de N-méthyl-pyrrolidone-2.

Le mélange réactionnel est agité quelques minutes à température ambiante (23°C), puis il est chauffé à 100°C. L'agitation est poursuivie en suivant le protocole de montée en température ci-après indiqué :

- 2 heures 30 minutes à 100°C, puis chauffage de 100°C à 180°C,
- et 3 heures à 180°C.

Le collodion ou solution de poly(amide-imide) ainsi obtenu est une masse liquide de couleur rouge sombre ayant un poids de 240 g (elle renferme 51 g de polymère). Par analyse infra-rouge, on ne détecte pas de fonctions NCO non réagie.

Le poly(amide-imide) est précipité par addition d'eau dans la solution où il se trouve dissout. Dans cette optique, on introduit progressivement, sous agitation, 50 g de cette solution dans 500 $cm^3$ d'eau. Le précipité obtenue est filtré, lavé avec de l'eau, puis il est séché à 100°C pendant 24 heures sous un vide de $53{,}2.10^2$ Pa. La poudre obtenue est ensuite finement broyée et tamisée pour retenir des particules inférieures à 200 µm.

La poudre de poly(amide-imide) de granulométrie inférieure à 200 µm obtenue est ensuite chauffée à 250°C pendant 1 heure.

Pendant ce traitement thermique, il se produit simultanément un dégagement de méthylcyclopentadiène et la transformation, en bouts de chaînes du poly(amide-imide) :

- des groupements terminaux $Y_1$, comprenant chacun un reste $\alpha$-méthyl-nadimido, de formule :

$Y_1$ = 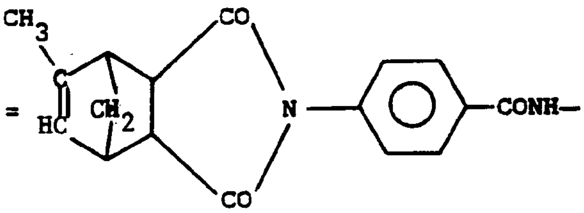

- en groupements terminaux $Z_1$, comprenant chacun une fonction maléimide libre, de formule :

$Z_1$ = 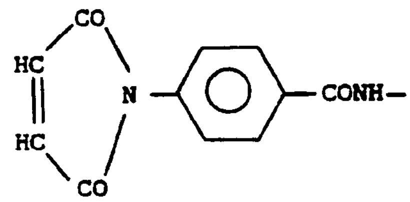

La formation des fonctions maléimide libres est suivie par analyse infra-rouge et par des mesures de perte de poids par thermo-gravimétrie, et on constate que la transformation précitée est bien complète à l'issue du traitement thermique effectué (1 heure à 250°C).

S'agissant de la structure de la chaîne linéaire du poly(amide-imide), elle répond essentiellement à la formule suivante :

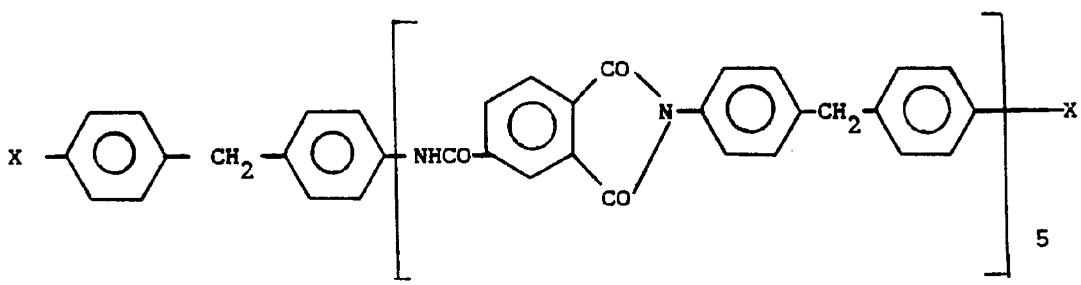

dans laquelle : avant déblocage thermique des fonctions maléimides X = $Y_1$, et après ledit déblocage X = $Z_1$.

La poudre obtenue après réalisation du déblocage thermique des fonctions maléimide est introduite, en quantité de 7,5 g, dans un moule cylindrique (diamètre : 5 cm) et on installe l'ensemble entre les deux plateaux circulaires d'une presse (ces plateaux sont adaptés à la taille du moule et préchauffés à 300°C) sur lesquels on applique une pression de 1,47 MPa. Lorsque la température de la matière atteint 250°C, on applique une pression de 4,41 MPa. Lorsque l'équilibre thermique est atteint, c'est-à-dire lorsque la température de la matière est à 300°C, on maintient l'ensemble dans ces conditions pendant 1 heure encore. On laisse ensuite refroidir le moule et son contenu pendant 12 heures sous 1 MPa de pression. Après démoulage, on obtient un objet moulé cylindrique (diamètre : 5 cm ; hauteur : 3 mm) que l'on place dans une étuve préchauffée à 250°C pendant 16 heures. Au bout de ce temps, l'objet moulé présente les caractéristiques mécaniques en flexion suivantes (mesurées selon les indications de la norme ASTM D 790 M ; portée 35 mm) :

- résistance en flexion : 140 MPa,
- module en flexion : 3500 MPa.

La température de transition vitreuse du polymère de l'objet moulé déterminée par des mesures en TMA ("Thermal Mechanical Analysis" ou Analyse Macanique Thermique ; norme : ASTM E 831-81 avec une vitesse de montée en température de 5°C/min) est de 280°C.

L'objet moulé est soumis à un vieillissement thermique de 3000 heures à 290°C : au bout de ce temps, il ne présente aucune dégradation apparente, fissuration ou formation de cloques.

Description du procédé de préparation de l'acide (α-méthyl-nadimido)-4 benzoïque :

Dans un réacteur agité, muni d'un réfrigérant ascendant et préchauffé à 60°C à l'aide d'un bain d'huile approprié, on introduit simultanément en 10 minutes :

- 68,5 g (0,500 mole) d'acide amino-4 benzoïque en solution dans 300 $cm^3$ d'acétone, et
- 97,9 g (0,550 mole) d'anhydride α-méthyl-nadique ou anhydride méthyl-4 endométhylène-3,6 tétrahydro-1,2,3,6 phtalique.

On laisse réagir pendant 20 minutes sous agitation. Au bout de ce temps, on introduit successivement :

- 16,7 g (0,165 mole) de triéthylamine,
- 0,55 g d'acétate de nickel, et
- 61,2 g (0,600 mole) d'anhydride acétique.

On laisse réagir à 60°C pendant 3 heures 15 minutes sous agitation. Au bout de ce temps, on refroidit jusqu'à 20°C, ce qui provoque la formation d'un précipité beige. On précipite complètement le produit par ajout de 500 $cm^3$ d'eau glacée.

Après filtration, le produit obtenu est purifié par traitement avec 300 $cm^3$ de toluène dans le réacteur décrit plus haut, préchauffé à 110°C : on laisse sous agitation pendant 1 heure et, au bout de ce temps, on refroidit jusqu'à 20°C et on filtre le produit blanc obtenu. Après séchage à 100°C, sous $53.10^2$ Pa pendant 12 heures, on obtient 84,7 g d'un produit blanc présentant un point de fusion de 220°C mesurée par analyse thermique différentielle et ayant une structure conforme à celle de l'acide (α-méthyl-nadimido)-4 benzoïque selon les analyses RMN du proton effectuées.

EXEMPLE 2 :

On opère comme indiqué ci-avant à l'exemple 1, mais à partir des charges suivantes :

- 55 g (0,22 mole) de diisocyanato-4,4'-diphénylméthane,
- 38,4 g (0,20 mole) de monoanhydride d'acide trimellique,
- 11,9 g (0,04 mole) d'acide (α-méthyl-nadimido)-4 benzoïque
- et 246 g de N-méthyl-pyrrolidone-2.

On laisse réagir pendant 5 heures 30 minutes, sous agitation, en suivant le protocole de montée en température indiqué à l'exemple 1.

Le collodion ou solution de poly(amide-imide) ainsi obtenu est une masse liquide de couleur rouge sombre ayant un poids de 332 g (elle renferme 86 g de polymère). Par analyse infra-rouge, on ne détecte pas de fonctions anhydride et NCO dans le collodion.

La précipitation du collodion dans l'eau ainsi que le lavage et le séchage du précipité formé sont identiques aux opérations décrites à l'exemple 1. On obtient une poudre beige qui est ensuite broyée finement et tamisée en particules inférieures à 200 μm.

On procède ensuite au déblocage thermique des fonctions maléimide, puis à l'opération de moulage en utilisant là aussi les méthodes décrites à l'exemple 1. Dans ce second exemple, l'objet moulé cylindrique obtenu est soumis à un recuit dans une étuve préchauffée à 250°C pendant 48 heures (au lieu de 16 heures dans l'exemple 1) : la température de transition vitreuse du polymère de l'objet moulé est trouvé égale à 280°C.

## Revendications

### Revendications pour les Etats contractants suivants : AT, BE, CH, DE, DK, FR, GB, GR, IT, LI, LU, NL, SE

**1.** Poly(amide-imide)aromatiques linéaires dont les chaînes comportent des groupements terminaux comprenant chacun un reste à fonction maléimide latente, ces poly(amide-imide) étant caractérisés en ce qu'ils sont préparés par un procédé présentant les particularités suivantes :

* on réalise un chauffage, en opérant à une température allant de 50°C à 200°C et en présence d'un solvant organique ou mélange de solvants organiques, des réactifs (i), (2i) et (3i) suivants , lesdits réactifs étant mis à réagir simultanément :
  - (i) est un diisocyanate de formule :

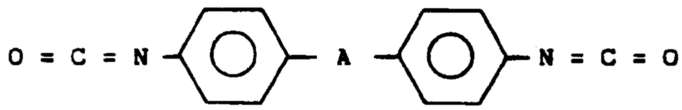 (I)

dans laquelle le symbole A représente un lien valentiel simple ou un groupement :

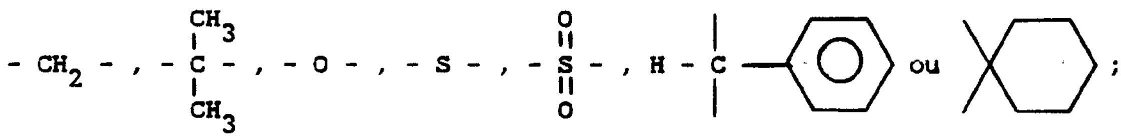

- (2i) est un monoanhydride d'acide tricarboxylique de formule :

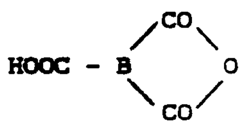 (II)

dans laquelle le symbole B représente un radical trivalent consistant dans un radical aromatique possédant au moins 6 atomes de carbone, substitués ou non, ou dans deux de ces radicaux reliés entre eux par un lien valentiel simple ou un groupement :

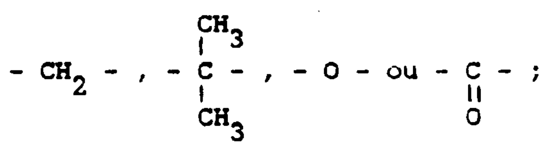

ou le monoanhydride-3,4 d'acide diphényl-sulfone-tricarboxylique-3,4,3'; et

- (3i) un monoacide carboxylique, comprenant un reste à fonction maléimide latente, de formule :

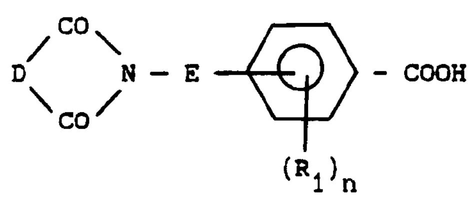 (III)

dans laquelle :

. le symbole $R_1$ représente un radical méthyle ;

. n est un nombre entier égal à 0,1, 2 ou 3 ;

. le symbole E représente un lien valentiel simple ou un groupement $-CH_2-$ et se trouve en position ortho, méta ou para par rapport à l'atome de carbone du cycle benzénique relié au groupe COOH ;

. le symbole D représente un groupement divalent :

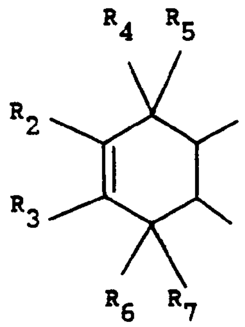
,
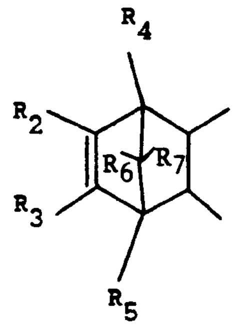
ou
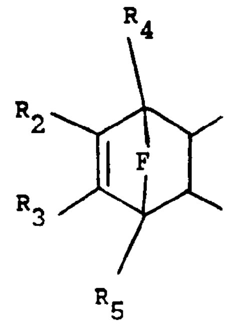

où les symboles $R_2$, $R_3$, $R_4$, $R_5$, $R_6$ et $R_7$, identiques ou différents, représentent chacun un atome d'hydrogène ou un radical alkyle, linéaire ou ramifié, ayant de 1 à 4 atomes et le symbole F représente un atome d'oxygène ou de soufre ;

* les proportions respectives des réactifs (i) et (2i) sont choisies de façon à ce que le rapport r :

$$\frac{\text{nombre de moles de diisocyanate (i)}}{\text{nombre de moles d'anhydride (2i)}}$$

se situe dans l'intervalle allant de 1,05/1 à 2,1 ;

* la proportion du réactif (3i) est choisie de façon que le rapport r' :

$$\frac{\text{nombre de moles d'acide carboxylique (3i)}}{\text{nombre de moles de diisocyanate (i)} - \text{nombre de moles d'anhydride (2i)}}$$

soit égal à 2.

**2.** Poly(amide-imide) selon la revendication 1, caractérisés en ce que le diisocyanate (i) de formule (I) est choisi dans le groupe formé par :
- le diisocyanato-4,4'-diphényl-2,2-propane,
- le diisocyanato-4,4'-diphénylméthane,
- le diisocyanato-4,4'-biphényle,
- le diisocyanato-4,4'-diphénylsulfure,
- le diisocyanato-4,4'-diphénylsulfone,
- le diisocyanato-4,4'-diphényléther,
- le diisocyanato-4,4'-diphényl-1,1-cyclohexane.

**3.** Poly(amide-imide) selon l'une quelconque des revendications 1 et 2, caractérisés en ce que le monoanhydride d'acide tricarboxylique (2i) de formule (II) est choisi dans le groupe formé par :
- le monoanhydride d'acide trimellique,
- le monoanhydride-2,3 d'acide naphtalène-tricarboxylique-2,3,6,
- le monoanhydride-1,8 d'acide naphtalène-tricarboxylique-1,8,4,
- le monoanhydride-1,2 d'acide naphtalène-tricarboxylique-1,2,5,
- le monoanhydride-3,4 d'acide diphényl-tricarboxylique-3,4,4',
- le monoanhydride-3,4 d'acide diphényl-sulfone-tricarboxylique-3,4,3',
- le monoanhydride-3,4 d'acide diphényl-éther-tricarboxylique-3,4,4',
- le monoanhydride-3,4 d'acide benzophénone-tricarboxylique 3,4,4',
- le monoanhydride-3,4 d'acide diphényl-isopropylène-tricarboxylique-3,4,3'.

**4.** Poly(amide-imide) selon l'une quelconque des revendications 1 à 3, caractérisés en ce que le monoacide carboxylique (3i), comprenant un reste à fonction maléimide lente, de formule (III) est choisi dans le groupe formé par :
- l'acide (tétrahydro-1,2,3,6 phtalimido)-2 benzoïque,
- l'acide (tétrahydro-1,2,3,6 phtalimido)-3 benzoïque,
- l'acide (tétrahydro-1,2,3,6 phtalimido)-4 benzoïque,
- l'acide nadimido-2 benzoïque ou acide (endométhylène-3,6 tétrahydro-1,2,3,6 phtalimido)-2 benzoïque,
- l'acide nadimido-3 benzoïque,
- l'acide nadimido-4 benzoïque,
- l'acide (α-méthyl-nadimido)-2 benzoïque ou acide (méthyl-4 endométhylène-3,6 tétrahydro-1,2,3,6 phtalimido)-2 benzoïque),

- l'acide (α-méthyl-nadimido)-3 benzoïque,
- l'acide (α-méthyl-nadimido)-4 benzoïque,
- l'acide (endo-oxy-3,6 tétrahydro-1,2,3,6 phtalimido)-2 benzoïque,
- l'acide (endo-oxy-3,6 tétrahydro-1,2,3,6 phtalimido)-3 benzoïque,
- l'acide (endo-oxy-3,6 tétrahydro-1,2,3,6 phtalimido)-4 benzoïque.

**5.** Procédé de préparation des poly(amide-imide) selon l'une quelconque des revendications 1 à 4, caractérisé en ce que l'on dissout les réactifs de départ (i), (2i) et (3i), qui sont engagés ensemble, dans un solvant organique ou dans un mélange de solvants organiques en opérant à température ambiante, de l'ordre de 20°C à 30°C, puis on élève la température de la solution obtenue à la température de réaction désirée comprise entre 50°C et 200°C et, de préférence, entre 80°C et 190°C.

**6.** Procédé de préparation selon la revendication 5, caractérisé en ce que les solvants mis en oeuvre sont pris dans le groupe formé par : le N,N-diméthyl-acétamide, le N,N-diméthylformamide, la N-méthyl-pyrrolidone-2, le diméthyl-sulfoxyde, la tétraméthyl-1,1,3,3 urée, la diméthyl-1,3 urée et un mélange de ces solvants.

**7.** Utilisation des poly(amide-imide) fonctionnalisés en bout de chaîne selon l'une quelconque des revendications 1 à 4 pour la préparation de polymères réticulés qui consiste : dans un premier temps à réaliser le déblocage thermique des fonctions maléimide par simple chauffage du polymère en poudre à une température comprise entre 220°C et 280°C pendant une durée allant de 30 minutes à 2 heures ; puis, dans un second temps, à soumettre le polymère débloqué obtenu à un chauffage à une température comprise entre 150°C et 300°C en présence éventuellement d'un initiateur de polymérisation radicalaire ou d'un catalyseur de polymérisation anionique.

**Revendications pour l'Etat contractant suivant : ES**

**1.** Procédé de préparation de poly(amide-imide) aromatiques linéaires dont les chaînes comportent des groupements terminaux comprenant chacun un reste à fonction maléimide latente, caractérisé en ce qu'il présente les particularités suivantes :

* on réalise un chauffage, en opérant à une température allant de 50°C à 200°C et en présence d'un solvant organique ou mélange de solvants organiques, des réactifs (i), (2i) et (3i) suivants , lesdits réactifs étant mis à réagir simultanément :
  - (i) est un diisocyanate de formule :

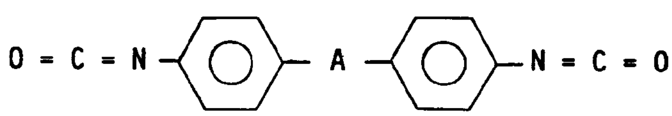

(I)

dans laquelle le symbole A représente un lien valentiel simple ou un groupement :

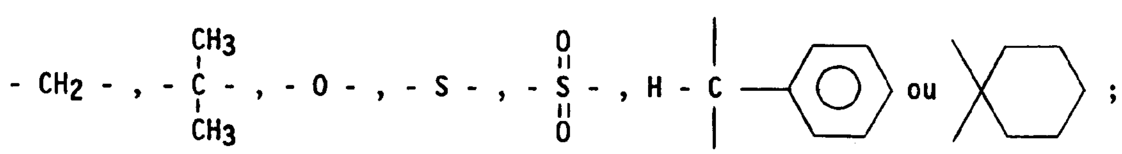

  - (2i) est un monoanhydride d'acide tricarboxylique de formule :

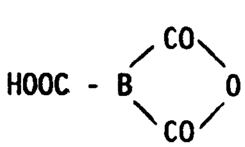

(II)

dans laquelle le symbole B représente un radical trivalent consistant dans un radical aromatique possédant au moins 6 atomes de carbone, substitués ou non, ou dans deux de ces radicaux reliés entre eux par un lien valentiel simple ou un groupement :

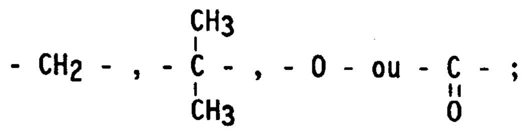

ou le monoanhydride-3,4 d'acide diphényl-sulfone-tricarboxylique-3,4,3'; et

- (3i) un monoacide carboxylique, comprenant un reste à fonction maléimide latente, de formule :

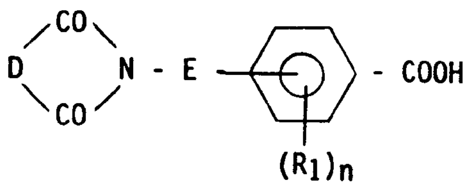

(III)

dans laquelle :

. le symbole $R_1$ représente un radical méthyle ;
. n est un nombre entier égal à 0,1, 2 ou 3 ;
. le symbole E représente un lien valentiel simple ou un groupement $-CH_2-$ et se trouve en position ortho, méta ou para par rapport à l'atome de carbone du cycle benzénique relié au groupe COOH ;
. le symbole D représente un groupement divalent :

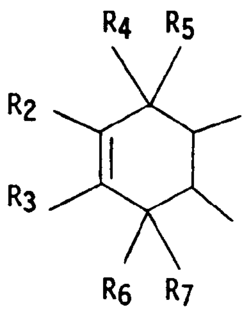

,

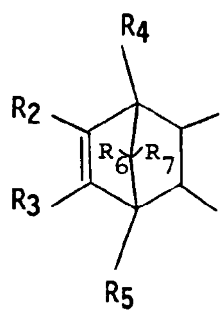

ou

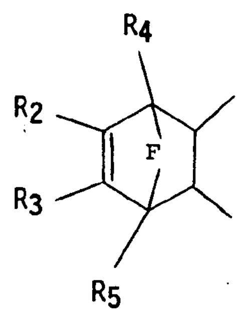

où les symboles $R_2$, $R_3$, $R_4$, $R_5$, $R_6$ et $R_7$, identiques ou différents, représentent chacun un atome d'hydrogène ou un radical alkyle, linéaire ou ramifié, ayant de 1 à 4 atomes et le symbole F représente un atome d'oxygène ou de soufre ;

* les proportions respectives des réactifs (i) et (2i) sont choisies de façon à ce que le rapport r :

$$\frac{\text{nombre de moles de diisocyanate (i)}}{\text{nombre de moles d'anhydride (2i)}}$$

se situe dans l'intervalle allant de 1,05/1 à 2,1 ;

* la proportion du réactif (3i) est choisie de façon que le rapport r' :

$$\frac{\text{nombre de moles d'acide carboxylique (3i)}}{\text{nombre de moles de diisocyanate (i)} - \text{nombre de moles d'anhydride (2i)}}$$

soit égal à 2.

2. Procédé selon la revendication 1, caractérisé en ce que le diisocyanate (i) de formule (I) est choisi dans le groupe formé par :
   - le diisocyanato-4,4'-diphényl-2,2-propane,
   - le diisocyanato-4,4'-diphénylméthane,
   - le diisocyanato-4,4'-biphényle,

- le diisocyanato-4,4'-diphénylsulfure,
- le diisocyanato-4,4'-diphénylsulfone,
- le diisocyanato-4,4'-diphényléther,
- le diisocyanato-4,4'-diphényl-1,1-cyclohexane.

3. Procédé selon l'une quelconque des revendications 1 et 2, caractérisé en ce que le monoanhydride d'acide tricarboxylique (2i) de formule (II) est choisi dans le groupe formé par :
   - le monoanhydride d'acide trimellique,
   - le monoanhydride-2,3 d'acide naphtalène-tricarboxylique-2,3,6,
   - le monoanhydride-1,8 d'acide naphtalène-tricarboxylique-1,8,4,
   - le monoanhydride-1,2 d'acide naphtalène-tricarboxylique-1,2,5,
   - le monoanhydride-3,4 d'acide diphényl-tricarboxylique-3,4,4',
   - le monoanhydride-3,4 d'acide diphényl-sulfone-tricarboxylique-3,4,3',
   - le monoanhydride-3,4 d'acide diphényl-éther-tricarboxylique-3,4,4',
   - le monoanhydride-3,4 d'acide benzophénone-tricarboxylique 3,4,4',
   - le monoanhydride-3,4 d'acide diphényl-isopropylène-tricarboxylique-3,4,3'.

4. Procédé selon l'une quelconque des revendications 1 à 3, caractérisé en ce que le monoacide carboxylique (3i), comprenant un reste à fonction maléimide lente, de formule (III) est choisi dans le groupe formé par :
   - l'acide (tétrahydro-1,2,3,6 phtalimido)-2 benzoïque,
   - l'acide (tétrahydro-1,2,3,6 phtalimido)-3 benzoïque,
   - l'acide (tétrahydro-1,2,3,6 phtalimido)-4 benzoïque,
   - l'acide nadimido-2 benzoïque ou acide (endométhylène-3,6 tétrahydro-1,2,3,6 phtalimido)-2 benzoïque,
   - l'acide nadimido-3 benzoïque,
   - l'acide nadimido-4 benzoïque,
   - l'acide (α-méthyl-nadimido)-2 benzoïque ou acide (méthyl-4 endométhylène-3,6 tétrahydro-1,2,3,6 phtalimido)-2 benzoïque),
   - l'acide (α-méthyl-nadimido)-3 benzoïque,
   - l'acide (α-méthyl-nadimido)-4 benzoïque,
   - l'acide (endo-oxy-3,6 tétrahydro-1,2,3,6 phtalimido)-2 benzoïque,
   - l'acide (endo-oxy-3,6 tétrahydro-1,2,3,6 phtalimido)-3 benzoïque,
   - l'acide (endo-oxy-3,6 tétrahydro-1,2,3,6 phtalimido)-4 benzoïque.

5. Procédé selon l'une quelconque des revendications 1 à 4, caractérisé en ce que l'on dissout les réactifs de départ (i), (2i) et (3i), qui sont engagés ensemble, dans un solvant organique ou dans un mélange de solvants organiques en opérant à température ambiante, de l'ordre de 20°C à 30°C, puis on élève la température de la solution obtenue à la température de réaction désirée comprise entre 50°C et 200°C et, de préférence, entre 80°C et 190°C.

6. Procédé de préparation selon la revendication 5, caractérisé en ce que les solvants mis en oeuvre sont pris dans le groupe formé par : le N,N-diméthyl-acétamide, le N,N-diméthylformamide, la N-méthyl-pyrrolidone-2, le diméthyl-sulfoxyde, la tétraméthyl-1,1,3,3 urée, la diméthyl-1,3 urée et un mélange de ces solvants.

## Patentansprüche

## Patentansprüche für folgende Vertragsstaaten : AT, BE, CH, DE, DK, FR, GB, GR, IT, LI, LU, NL, SE

1. Lineare aromatische Poly(amide-imide) deren Ketten endständige Gruppen tragen, die jeweils einen Rest mit latenter Maleimidfunktion enthalten, wobei diese Poly(amide-imide) dadurch gekennzeichnet sind, daß sie durch ein Verfahren hergestellt sind, das die folgenden Merkmale aufweist:
   * man führt ein Erhitzen durch, indem bei einer Temperatur von 50 °C bis 200 °C und in Gegenwart eines organischen Lösungsmittels oder Gemisches organischer Lösungsmittel mit folgenden Reaktionsteilnehmern (i), (2i) und (3i) gearbeitet wird und diese Reaktionsteilnehmer gleichzeitig zur Reaktion gebracht werden:

- (i) ist ein Diisocyanat der Formel

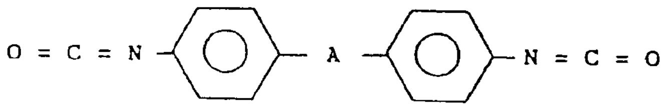

(I)

worin das Symbol A eine einfache Valenzbindung oder eine Gruppe

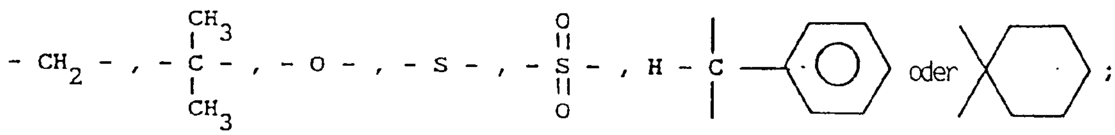

oder ;

bedeutet;

- (2i) ist ein Tricarbonsäure-monoanhydrid der Formel

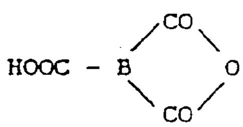

(II)

worin das Symbol B einen dreiwertigen Rest darstellt, der aus einem aromatischen Rest besteht, der mindestens 6 Kohlenstoffatome, substituiert oder nicht-substituiert,besitzt oder aus zwei dieser Reste besteht, die untereinander durch eine einfache Valenzbindung oder eine Gruppe

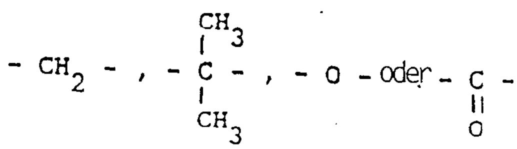

oder

oder das 3,4,3'-Diphenylsulfon-tricarbonsäure-3,4-monoanhyrid verbunden sind und

- (3i) eine Monocarbonsäure ist, die einen Rest mit latenter Maleimidfunktion enthält, der Formel

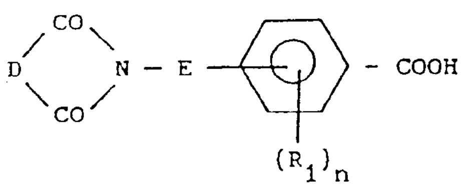

(III)

worin :

. das Symbol $R_1$ einen Methylrest bedeutet;

. n eine ganze Zahl gleich 0, 1, 2 oder 3 ist;

. das Symbol E eine einfache Valenzbindung darstellt oder eine Gruppe $-CH_2-$ ist und sich in ortho-, meta- oder para-Stellung in bezug auf das Kohlenstoffatom des mit der Gruppe COOH verknüpften Benzolringes befindet;

. das Symbol D eine zweiwertige Gruppe

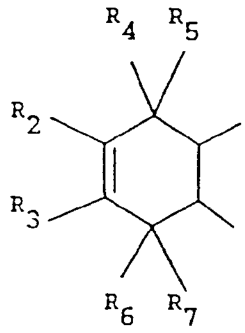

,

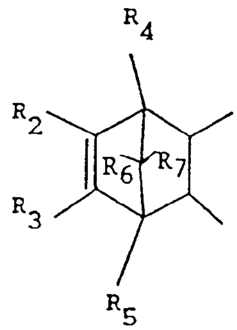

oder

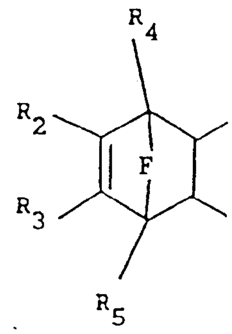

bedeutet, worin die Symbole $R_2$, $R_3$, $R_4$, $R_5$, $R_6$ und $R_7$, die identisch oder verschieden sein können, jeweils ein Wasserstoffatom oder einen geraden oder verzweigten Alkylrest mit 1 bis 4 Kohlenstoffatomen bedeuten, und das Symbol F ein Sauerstoff- oder Schwefelatom bedeutet;

* die betreffenden Mengenverhältnisse der Reaktionsteilnehmer (i) und (2i) derart ausgewählt sind, daß das Verhältnis r:

$$\frac{\text{Zahl der Mole Diisocyanat (i)}}{\text{Zahl der Mole Anhydrid (2i)}}$$

in dem Bereich von 1,05/1 bis 2,1 liegt;

* das Verhältnis des Reaktionsteilnehmers (3i) derart ausgewählt ist, daß das Verhältnis r':

$$\frac{\text{Zahl der Mole Carbonsäure (3i)}}{\text{Zahl der Mole Diisocyanat (i)} - \text{Zahl der Mole Anhydrid (2i)}}$$

gleich 2 ist.

**2.** Poly(amide-imide) gemäß Anspruch 1, dadurch gekennzeichnet, daß das Diisocyanat (i) der Formel (I) ausgewählt ist aus der Gruppe gebildet von:
4,4'-Diisocyanato-2,2-diphenylpropan
4,4'-Diisocyanato-diphenylmethan
4,4'-Diisocyanato-biphenyl
4,4'-Diisocyanato-diphenylsulfid
4,4'-Diisocyanato-diphenylsulfon
4,4'-Diisocyanato-diphenylether
4,4'-Diisocyanato-1,1-diphenyl-cyclohexan.

**3.** Poly(amide-imide) gemäß einem der Ansprüche 1 und 2, dadurch gekennzeichnet, daß das Tricarbonsäure-monoanhydrid (2i) der Formel (II) ausgewählt ist aus der Gruppe gebildet von:
Trimellitsäure-monoanhydrid
2,3,6-Naphthalin-tricarbonsäure-2,3-monoanhydrid
1,8,4-Naphthalin-tricarbonsäure-1,8-monoanhydrid
1,2,5-Naphthalin-tricarbonsäure-1,2-monoanhydrid
3,4,4'-Diphenyl-tricarbonsäure-3,4-monoanhydrid
3,4,3'-Diphenylsulfon-tricarbonsäure-3,4-monoanhydrid
3,4,4'-Diphenylether-tricarbonsäure-3,4-monoanhydrid
3,4,4'-Benzophenon-tricarbonsäure-3,4-monoanhydrid
3,4,3'-Diphenylisopropylen-tricarbonsäure-3,4-monoanhydrid.

**4.** Poly(amide-imide) gemäß einem der Ansprüche 1 bis 3, dadurch gekennzeichnet, daß die Monocarbonsäure (3i), welche einen Rest mit latenter Maleimidfunktion der Formel (III) aufweist, ausgewählt ist aus der Gruppe gebildet von:
2-(1,2,3,6-Tetrahydrophthalimido)-benzoesäure
3-(1,2,3,6-Tetrahydrophthalimido)-benzoesäure
4-(1,2,3,6-Tetrahydrophthalimido)-benzoesäure
2-Nadimidobenzoesäure oder 2-(3,6-Endomethylen-1,2,3,6-tetrahydrophthalimido)-benzoesäure
3-Nadimido-benzoesäure
4-Nadimido-benzoesäure

2-(α-Methyl-nadimido)-benzoesäure oder 2-(4-Methyl-3,6-endomethylen-1,2,3,6-tetrahydrophthalimido)-benzoesäure
3-(α-Methyl-nadimido)-benzoesäure
4-(α-Methyl-nadimido)-benzoesäure
2-(3,6-Endo-oxy-1,2,3,6-tetrahydrophthalimido)-benzoesäure
3-(3,6-Endo-oxy-1,2,3,6-tetrahydrophthalimido)-benzoesäure
4-(3,6-Endo-oxy-1,2,3,6-tetrahydrophthalimido)-benzoesäure

5. Verfahren zur Herstellung der Poly(amide-imide) gemäß einem der Ansprüche 1 bis 4, dadurch gekennzeichnet, daß man die Ausgangsreaktanten (i), (2i) und (3i), welche zusammen eingesetzt werden, in einem organischen Lösungsmittel oder einem Gemisch organischer Lösungsmittel löst, wobei bei Umgebungstemperatur in der Größenordnung von 20 °C bis 30 °C gearbeitet wird und daß man die Temperatur der erhaltenen Lösung zu der gewünschten Reaktionstemperatur zwischen 50 °C und 200 °C und vorzugsweise zwischen 80 °C und 190 °C erhöht.

6. Verfahren gemäß Anspruch 5, dadurch gekennzeichnet, daß die eingesetzten Lösungsmittel aus der Gruppe genommen sind gebildet durch: N,N-Dimethylacetamid, N,N-Dimethylformamid, N-Methyl-2-pyrrolidon, Dimethylsulfoxid, 1,1,3,3-Tetramethylharnstoff, 1,3-Dimethylharnstoff und einem Gemisch dieser Lösungsmittel.

7. Verwendung der Poly(amide-imide), die am Ende der Kette funktionalisiert sind, gemäß einem der Ansprüche 1 bis 4 zur Herstellung von vernetzten Polymeren, darin bestehend: in einer ersten Zeitspanne die thermische Entblockierung der Maleimidfunktionen durch einfaches Erhitzen des Polymeren in Pulverform auf eine Temperatur zwischen 220 °C und 280 °C während einer Dauer von 30 Minuten bis 2 Stunden durchzuführen; dann in einer zweiten Zeitspanne das erhaltene entblockierte Polymere einem Erhitzen auf eine Temperatur zwischen 150 °C und 300 °C, gegebenenfalls in Anwesenheit eines radikalischen Polymerisationsinitiators oder eines anionischen Polymerisationskatalysators, zu unterwerfen.

**Patentansprüche für folgenden Vertragsstaat : ES**

1. Verfahren zur Herstellung von linearen aromatischen Poly(amiden-imiden), deren Ketten endständige Gruppen tragen, die jeweils einen Rest mit latenter Maleimidfunktion enthalten, dadurch gekennzeichnet, daß es die folgenden Merkmale aufweist:
   * man führt ein Erhitzen durch, indem bei einer Temperatur von 50 °C bis 200 °C und in Gegenwart eines organischen Lösungsmittels oder eines Gemisches organischer Lösungsmittel mit den folgenden Reaktionsteilnehmern (i), (2i) und (3i) gearbeitet wird, wobei diese Reaktionsteilnehmer gleichzeitig zur Reaktion gebracht werden:
     - (i) ist ein Diisocyanat der Formel

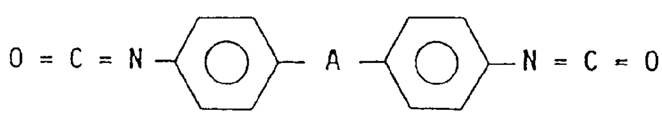

(I)

worin das Symbol A eine einfache Valenzbindung oder eine Gruppe

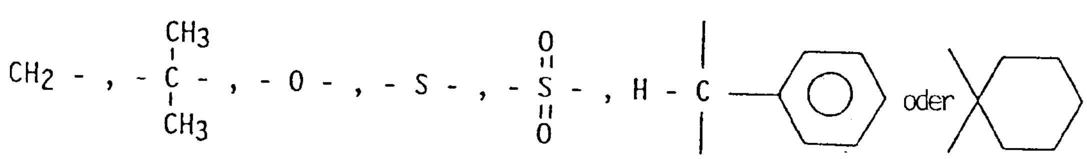

;

bedeutet;
     - (2i) ist ein Tricarbonsäure-monoanhydrid der Formel

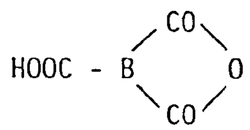

(II)

worin das Symbol B einen dreiwertigen Rest darstellt, der aus einem aromatischen Rest besteht, der mindestens 6 Kohlenstoffatome,substituiert oder nicht-substituiert besitzt oder aus zwei dieser Reste besteht, die untereinander durch eine einfache Valenzbindung oder eine Gruppe

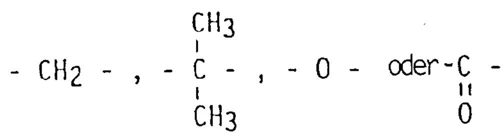

oder das 3,4,3'-Diphenylsulfon-tricarbonsäure-3,4-monoanhyrid verbunden sind und

- (3i) eine Monocarbonsäure ist, die einen Rest mit latenter Maleimidfunktion enthält, der Formel

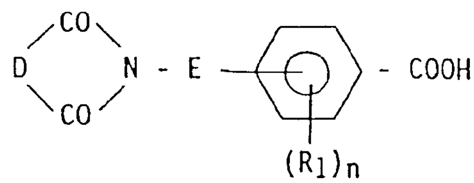

(III)

worin :

. das Symbol $R_1$ einen Methylrest bedeutet;

. n eine ganze Zahl gleich 0, 1, 2 oder 3 ist;

. das Symbol E eine einfache Valenzbindung darstellt oder eine Gruppe $-CH_2-$ ist und sich in ortho-, meta- oder para-Stellung in bezug auf das Kohlenstoffatom des mit der Gruppe COOH verknüpften Benzolringes befindet;

. das Symbol D eine zweiwertige Gruppe

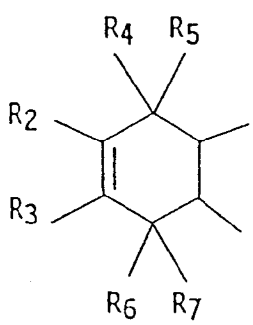

,

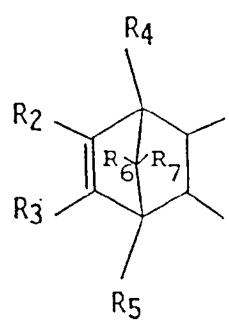

oder

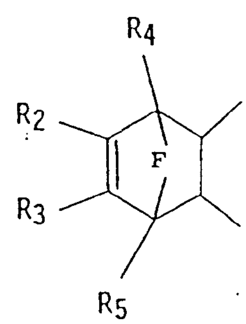

bedeutet, worin die Symbole $R_2$, $R_3$, $R_4$, $R_5$, $R_5$ und $R_7$, die identisch oder verschieden sind, jeweils ein Wasserstoffatom oder einen geraden oder verzweigten Alkylrest mit 1 bis 4 Kohlenstoffatomen bedeuten, und das Symbol F ein Sauerstoff- oder Schwefelatom bedeutet;

* die betreffenden Mengenverhältnisse der Reaktionsteilnehmer (i) und (2i) derart ausgewählt sind, daß das Verhältnis r:

$$\frac{\text{Zahl der Mole Diisocyanat (i)}}{\text{Zahl der Mole Anhydrid (2i)}}$$

in dem Bereich von 1,05/1 bis 2,1 liegt;

* das Verhältnis des Reaktionsteilnehmers (3i) derart ausgewählt ist, daß das Verhältnis r':

$$\frac{\text{Zahl der Mole Carbonsäure (3i)}}{\text{Zahl der Mole Diisocyanat (i)} - \text{Zahl der Mole Anhydrid (2i)}}$$

gleich 2 ist.

2. Verfahren gemäß Anspruch 1, dadurch gekennzeichnet, daß das Diisocyanat (i) der Formel (I) ausgewählt ist aus der Gruppe gebildet von:
4,4'-Diisocyanato-2,2-diphenylpropan
4,4'-Diisocyanato-diphenylmethan
4,4'-Diisocyanato-biphenyl
4,4'-Diisocyanato-diphenylsulfid
4,4'-Diisocyanato-diphenylsulfon
4,4'-Diisocyanato-diphenylether
4,4'-Diisocyanato-1,1-diphenyl-cyclohexan.

3. Verfahren gemäß einem der Ansprüche 1 und 2, dadurch gekennzeichnet, daß das Tricarbonsäure-monoanhydrid (2i) der Formel (II) ausgewählt ist aus der Gruppe gebildet von:
Trimellitsäure-monoanhydrid
2,3,6-Naphthalin-tricarbonsäure-2,3-monoanhydrid
1,8,4-Naphthalin-tricarbonsäure-1,8-monoanhydrid
1,2,5-Naphthalin-tricarbonsäure-1,2-monoanhydrid
3,4,4'-Diphenyl-tricarbonsäure-3,4-monoanhydrid
3,4,3'-Diphenylsulfon-tricarbonsäure-3,4-monoanhydrid
3,4,4'-Diphenylether-tricarbonsäure-3,4-monoanhydrid
3,4,4'-Benzophenon-tricarbonsäure-3,4-monoanhydrid
3,4,3'-Diphenylisopropylen-tricarbonsäure-3,4-monoanhydrid.

4. Verfahren gemäß einem der Ansprüche 1 bis 3, dadurch gekennzeichnet, daß die Monocarbonsäure (3i), welche einen Rest mit latenter Maleimidfunktion der Formel (III) aufweist, ausgewählt ist aus der Gruppe gebildet von:
2-(1,2,3,6-Tetrahydrophthalimido)-benzoesäure
3-(1,2,3,6-Tetrahydrophthalimido)-benzoesäure
4-(1,2,3,6-Tetrahydrophthalimido)-benzoesäure
2-Nadimidobenzoesäure oder 2-(3,6-Endomethylen-1,2,3,6-tetrahydrophthalimido)-benzoesäure
3-Nadimido-benzoesäure
4-Nadimido-benzoesäure
2-($\alpha$-Methyl-nadimido)-benzoesäure oder 2-(4-Methyl-3,6-endomethylen -1,2,3,6-tetrahydrophthalimido)-benzoesäure
3-($\alpha$-Methyl-nadimido)-benzoesäure
4-($\alpha$-Methyl-nadimido)-benzoesäure
2-(3,6-Endo-oxy-1,2,3,6-tetrahydrophthalimido)-benzoesäure
3-(3,6-Endo-oxy-1,2,3,6-tetrahydrophthalimido)-benzoesäure
4-(3,6-Endo-oxy-1,2,3,6-tetrahydrophthalimido)-benzoesäure

5. Verfahren gemäß einem der Ansprüche 1 bis 4, dadurch gekennzeichnet, daß man die Ausgangsreaktionsteilnehmer (i), (2i) und (3i), welche zusammen eingesetzt werden, in einem organischen Lösungsmittel oder einem Gemisch organischer Lösungsmittel löst, wobei bei Umgebungstemperatur in der Größenordnung von 20 °C bis 30 °C gearbeitet wird und daß man die Temperatur der erhaltenen Lösung zu der gewünschten Reaktionstemperatur zwischen 50 °C und 200 °C und vorzugsweise zwischen 80 °C und 190 °C erhöht.

6. Herstellungsverfahren gemäß Anspruch 5, dadurch gekennzeichnet, daß die eingesetzten Lösungsmittel aus der Gruppe genommen sind gebildet durch: N,N-Dimethylacetamid, N,N-Dimethylformamid, N-Methyl-2-pyrrolidon, Dimethylsulfoxid, 1,1,3,3-Tetramethylharnstoff, 1,3-Dimethylharnstoff und einem Gemisch dieser Lösungsmittel.

## Claims

### Claims for the following Contracting States : AT, BE, CH, DE, DK, FR, GB, GR, IT, LI, LU, NL, SE

1. Straight-chain aromatic poly(amide-imide)s in which the chains contain end groups each containing a residue having a latent maleimide function, these poly(amide-imide)s being characterized in that they are prepared by a process having the following features:

* the following reactants (i), (2i) and (3i) are heated, using a temperature ranging from 50°C to 200°C and in the presence of an organic solvent or a mixture of organic solvents, the said reactants being reacted simultaneously:
  - (i) is a diisocyanate of formula:

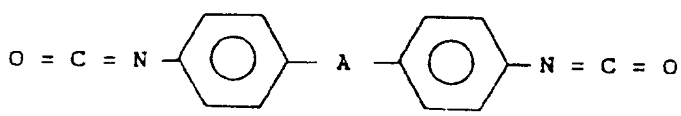

(I)

in which the symbol A represents a single valency bond or a group:

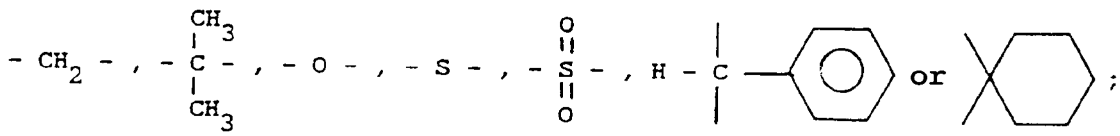

  - (2i) is a monoanhydride of a tricarboxylic acid of formula:

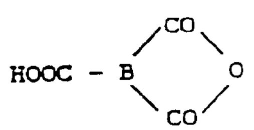

(II)

in which the symbol B represents a trivalent radical consisting of a substituted or unsubstituted aromatic radical having at least 6 carbon atoms, or of two of these radicals linked together by a single valency bond or a group:

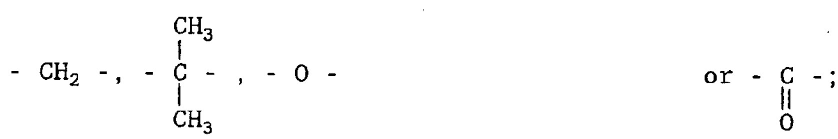

or diphenyl sulphone-3,4,3'-tricarboxylic acid 3,4-monoanhydride; and

  - (3i) a carboxylic monoacid, containing a residue having a latent maleimide function, of formula:

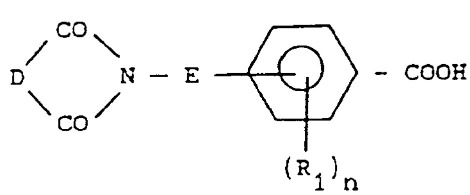

(III)

in which:

. the symbol $R_1$ represents a methyl radical;
. n is an integer equal to 0, 1, 2 or 3;
. the symbol E represents a single valency bond or a group: $CH_2$- and is in the ortho-, meta- or para-position relative to the carbon atom of the benzene ring bonded to the group COOH;
. the symbol D represents a divalent group:

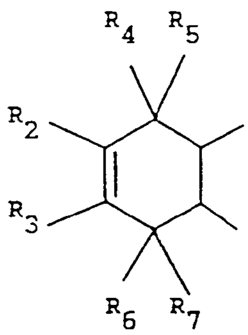 , 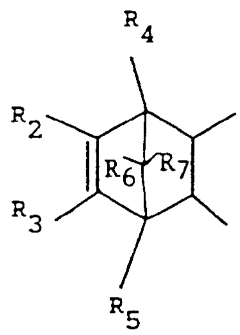 or 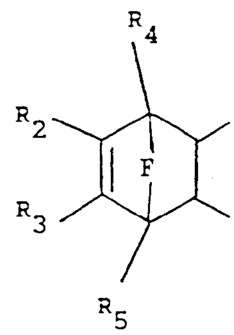

where the symbols $R_2$, $R_3$, $R_4$, $R_5$, $R_6$ and $R_7$, which may be identical or different, each represent a hydrogen atom or a straight-chain or branched alkyl radical having from 1 to 4 carbon atoms and the symbol F represents an oxygen or sulphur atom;

* the respective proportions of the reactants (i) and (2i) are chosen such that the ratio r:

$$\frac{\text{number of moles of diisocyanate (i)}}{\text{number of moles of anhydride (2i)}}$$

is in the range of from 1.05/1 to 2.1;

* the proportion of the reactant (3i) is chosen such that the ratio r':

$$\frac{\text{number of moles of carboxylic acid (3i)}}{\text{number of moles of diisocyanate (i)} - \text{number of moles of anhydride (2i)}}$$

is equal to 2.

2. Poly(amide-imide)s according to claim 1, characterized in that the diisocyanate (i) of formula (I) is chosen from the group formed by:
   - 4,4'-diisocyanato-2,2-diphenylpropane,
   - 4,4'-diisocyanatodiphenylmethane,
   - 4,4'-diisocyanatobiphenyl,
   - 4,4'-diisocyanatodiphenyl sulphide,
   - 4,4'-diisocyanatodiphenyl sulphone,
   - 4,4'-diisocyanatodiphenyl ether,
   - 4,4'-diisocyanato-1,1-diphenylcyclohexane.

3. Poly(amide-imide)s according to either of claims 1 and 2, characterized in that the monoanhydride of tricarboxylic acid (2i) of formula (II) is chosen from the group formed by:
   - trimellitic acid monoanhydride,
   - naphthalene-2,3,6-tricarboxylic acid 2,3-monoanhydride,
   - naphthalene-1,8,4-tricarboxylic acid 1,8-monoanhydride,
   - naphthalene-1,2,5-tricarboxylic acid 1,2-monoanhydride,
   - diphenyl-3,4,4'-tricarboxylic acid 3,4-monoanhydride,
   - diphenyl sulphone-3,4,3'-tricarboxylic acid 3,4-monoanhydride,
   - diphenyl ether-3,4,4'-tricarboxylic acid 3,4-monoanhydride,
   - benzophenone-3,4,4'-tricarboxylic acid 3,4-monoanhydride,
   - diphenylisopropylene-3,4,3'-tricarboxylic acid 3,4-monoanhydride.

4. Poly(amide-imide)s according to any one of claims 1 to 3, characterized in that the carboxylic monoacid (3i), containing a residue having a latent maleimide function, of formula (III) is chosen from the group formed by:
   - 2-(1,2,3,6-tetrahydrophthalimido)benzoic acid,
   - 3-(1,2,3,6-tetrahydrophthalimido)benzoic acid,
   - 4-(1,2,3,6-tetrahydrophthalimido)benzoic acid,
   - 2-nadimidobenzoic acid or 2-(3,6-endomethylene-1,2,3,6-tetrahydrophthalimido)benzoic acid,
   - 3-nadimidobenzoic acid,
   - 4-nadimidobenzoic acid,
   - 2-(α-methylnadimido)benzoic acid or 2-(4-methyl-3,6-endomethylene-1,2,3,6-tetrahydrophthalimido)benzoic acid,
   - 3-(α-methylnadimido)benzoic acid,

- 4-(α-methylnadimido)benzoic acid,
- 2-(3,6-endo-oxy-1,2,3,6-tetrahydrophthalimido)benzoic acid,
- 3-(3,6-endo-oxy-1,2,3,6-tetrahydrophthalimido)benzoic acid,
- 4-(3,6-endo-oxy-1,2,3,6-tetrahydrophthalimido)benzoic acid.

**5.** Process for the preparation of poly(amide-imide)s according to any one of claims 1 to 4, characterized in that the starting reactants (i), (2i) and (3i), which are employed together, are dissolved in an organic solvent or in a mixture of organic solvents, working at ambient temperature, of the order of 20°C to 30°C, and the temperature of the solution obtained is then raised to the desired reaction temperature of between 50°C and 200°C and preferably between 80°C and 190°C.

**6.** Preparation process according to claim 5, characterized in that the solvents used are taken from the group formed by: N,N-dimethylacetamide, N,N-dimethylformamide, N-methyl-2-pyrrolidone, dimethyl sulphoxide, 1,1,3,3-tetramethylurea, 1,3-dimethylurea and a mixture of these solvents.

**7.** Use of the poly(amide-imide)s containing functional groups at the end of the chain, according to any one of claims 1 to 4, for the preparation of crosslinked polymers, which consists: in a first period in carrying out the thermal deblocking of the maleimide functions by simple heating of the polymer in powder form at a temperature of between 220°C and 280°C for a period ranging from 30 minutes to 2 hours; then, in a second period, in subjecting the deblocked polymer obtained to heating at a temperature of between 150°C and 300°C, if appropriate in the presence of a free radical polymerization initiator or of an anionic polymerization catalyst.

**Claims for the following Contracting State : ES**

**1.** Process for the preparation of straight-chain aromatic poly(amide-imide)s in which the chains contain end groups each containing a residue having a latent maleimide function, characterized in that it has the following features:

* the following reactants (i), (2i) and (3i) are heated, using a temperature ranging from 50°C to 200°C and in the presence of an organic solvent or a mixture of organic solvents, the said reactants being reacted simultaneously:
  - (i) is a diisocyanate of formula:

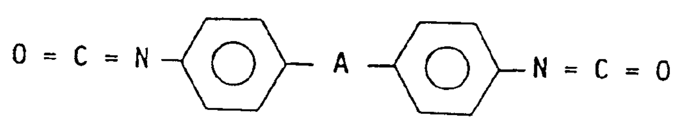

(I)

in which the symbol A represents a single valency bond or a group:

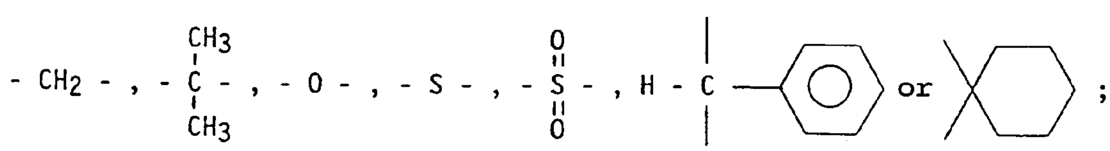

  - (2i) is a monoanhydride of a tricarboxylic acid of formula:

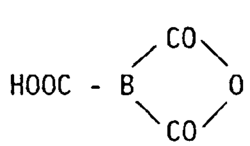

(II)

in which the symbol B represents a trivalent radical consisting of a substituted or unsubstituted aromatic radical having at least 6 carbon atoms, or of two of these radicals linked together by a

single valency bond or a group:

$-CH_2-$, 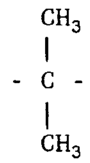, $-O-$ or 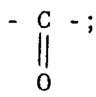;

or diphenyl sulphone-3,4,3'-tricarboxylic acid 3,4-monoanhydride; and

- (3i) a carboxylic monoacid, containing a residue having a latent maleimide function, of formula:

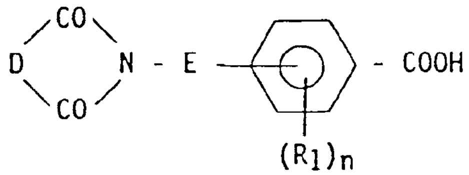 (III)

in which:

. the symbol $R_1$ represents a methyl radical;
. n is an integer equal to 0, 1, 2 or 3;
. the symbol E represents a single valency bond or a group $-CH_2-$ and is in the ortho-, meta- or para-position relative to the carbon atom of the benzene ring bonded to the group COOH;
. the symbol D represents a divalent group:

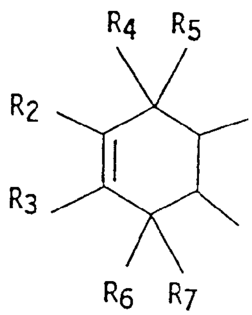 , 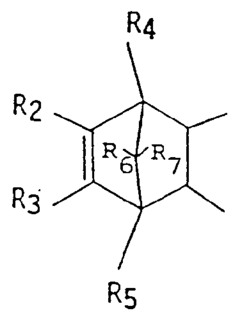 or 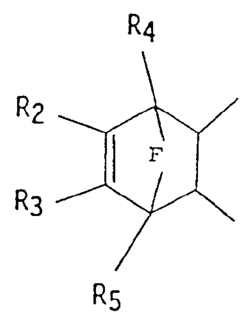

where the symbols $R_2$, $R_3$, $R_4$, $R_5$, $R_6$ and $R_7$, which may be identical or different, each represent a hydrogen atom or a straight-chain or branched alkyl radical having from 1 to 4 carbon atoms and the symbol F represents an oxygen or sulphur atom;

* the respective proportions of the reactants (i) and (2i) are chosen such that the ratio r:

$$\frac{\text{number of moles of diisocyanate (i)}}{\text{number of moles of anhydride (2i)}}$$

is in the range of from 1.05/1 to 2.1;
* the proportion of the reactant (3i) is chosen such that the ratio r':

$$\frac{\text{number of moles of carboxylic acid (3i)}}{\text{number of moles of diisocyanate (i)} - \text{number of moles of anhydride (2i)}}$$

is equal to 2.

2. Process according to claim 1, characterized in that the diisocyanate (i) of formula (I) is chosen from the group formed by:
- 4,4'-diisocyanato-2,2-diphenylpropane,
- 4,4'-diisocyanatodiphenylmethane,
- 4,4'-diisocyanatobiphenyl,
- 4,4'-diisocyanatodiphenyl sulphide,
- 4,4'-diisocyanatodiphenyl sulphone,
- 4,4'-diisocyanatodiphenyl ether,

- 4,4'-diisocyanato-1,1-diphenylcyclohexane.

3. Process according to either of claims 1 and 2, characterized in that the monoanhydride of tricarboxylic acid (2i) of formula (II) is chosen from the group formed by:
   - trimellitic acid monoanhydride,
   - naphthalene-2,3,6-tricarboxylic acid 2,3-monoanhydride,
   - naphthalene-1,8,4-tricarboxylic acid 1,8-monoanhydride,
   - naphthalene-1,2,5-tricarboxylic acid 1,2-monoanhydride,
   - diphenyl-3,4,4'-tricarboxylic acid 3,4-monoanhydride,
   - diphenyl sulphone-3,4,3'-tricarboxylic acid 3,4-monoanhydride,
   - diphenyl ether-3,4,4'-tricarboxylic acid 3,4-monoanhydride,
   - benzophenone-3,4,4'-tricarboxylic acid 3,4-monoanhydride,
   - diphenylisopropylene-3,4,3'-tricarboxylic acid 3,4-monoanhydride.

4. Process according to any one of claims 1 to 3, characterized in that the carboxylic monoacid (3i), containing a residue having a latent maleimide function, of formula (III) is chosen from the group formed by:
   - 2-(1,2,3,6-tetrahydrophthalimido)benzoic acid,
   - 3-(1,2,3,6-tetrahydrophthalimido)benzoic acid,
   - 4-(1,2,3,6-tetrahydrophthalimido)benzoic acid,
   - 2-nadimidobenzoic acid or 2-(3,6-endomethylene-1,2,3,6-tetrahydrophthalimido)benzoic acid,
   - 3-nadimidobenzoic acid,
   - 4-nadimidobenzoic acid,
   - 2-(α-methylnadimido)benzoic acid or 2-(4-methyl-3,6-endomethylene-1,2,3,6-tetrahydrophthalimido)benzoic acid,
   - 3-(α-methylnadimido)benzoic acid,
   - 4-(α-methylnadimido)benzoic acid,
   - 2-(3,6-endo-oxy-1,2,3,6-tetrahydrophthalimido)benzoic acid,
   - 3-(3,6-endo-oxy-1,2,3,6-tetrahydrophthalimido)benzoic acid,
   - 4-(3,6-endo-oxy-1,2,3,6-tetrahydrophthalimido)benzoic acid.

5. Process according to any one of claims 1 to 4, characterized in that the starting reactants (i), (2i) and (3i), which are employed together, are dissolved in an organic solvent or in a mixture of organic solvents, working at ambient temperature, of the order of 20°C to 30°C, and the temperature of the solution obtained is then raised to the desired reaction temperature of between 50°C and 200°C and preferably between 80°C and 190°C.

6. Preparation process according to claim 5, characterized in that the solvents used are taken from the group formed by: N,N-dimethylacetamide, N,N-dimethylformamide, N-methyl-2-pyrrolidone, dimethyl sulphoxide, 1,1,3,3-tetramethylurea, 1,3-dimethylurea and a mixture of these solvents.